# FASCICULE DE BREVET EUROPEEN

(11) **EP 3 152 958 B1**
(45) Date de publication et mention de la délivrance du brevet: **08.01.2020**
(21) Numéro de dépôt: 15726979.6
(22) Date de dépôt: 05.06.2015
(51) Int. Cl.: H04W 36/20, H04W 84/00

(54) **BASCULEMENT PROGRESSIF DE BANDE DE FREQUENCES RADIO DANS UN NOEUD RELAIS**
PROGRESSIVE UMSCHALTUNG EINES HOCHFREQUENZBANDS IN EINEM RELAISKNOTEN
PROGRESSIVE TOGGLING OF RADIO FREQUENCY BAND IN A RELAY NODE

(30) Priorité: 06.06.2014 FR 1401373
(43) Date de publication de la demande: 12.04.2017
(73) Titulaire: Airbus DS SAS, 78990 Elancourt (FR)
(72) Inventeur: MARQUE-PUCHEU, Gérard, F-78480 Verneuil (FR); DELMAS, Serge, F-78370 Plaisir (FR); HELIAS-FORET, Christine, F-78180 Montigny le Bretonneux (FR); GRUET, Christophe, F-78180 Montigny le Bretonneux (FR)
(74) Mandataire: Cabinet Camus Lebkiri
(86) Numéro de dépôt international: PCT/EP2015/062597
(87) Numéro de publication internationale: WO 2015/185733

(56) Documents cités:
- WO-A1-2010/124729
- WO-A1-2011/141177
- WO-A1-2012/085620
- WO-A1-2012/158077
- WO-A1-2014/086584
- US-A1- 2007 117 517

## Description

### Domaine de l'invention

La présente invention concerne d'une manière générale un procédé de basculement progressif de bande de fréquences radio dans un nœud relais d'un réseau de radiocommunications. L'invention trouve une application dans le déploiement de réseaux de radiocommunications, par exemple de type ad-hoc ou à infrastructure, tels que ceux utilisés par les professionnels de la sécurité ou par les opérateurs de réseaux publics.

### Etat de la technique et problèmes techniques rencontrés

Il est connu des systèmes de radiocommunications cellulaires proposant un basculement de canal de communication entre une station de base et au moins une station mobile. Le basculement entre un premier canal de communication et un deuxième canal de communication a pour avantage d'obtenir une meilleure émission-réception radio sans interférence entre la station de base et la station mobile.

Cependant les procédés connus impliquent tout de même une interruption de la communication entre les deux entités, à un temps donné pendant un bref instant, pour basculer d'un canal vers un autre sans prendre en considération les potentielles stations mobiles arrivant dans la communication en cours de basculement de canal.

Il existe donc un besoin de basculement progressif dans un nœud relais d'un premier canal de communication d'une première bande de fréquence vers un deuxième canal de communication d'une deuxième bande de fréquence sans interruption de service pour les stations en communication et en prenant en considération les stations arrivant dans la communication au cours du changement de canal.

Les documents US 2007/117517 A1 intitulé « Method for dynamic frequency selection and system supporting the same in a cognitive radio wireless communication system », WO 2010/124729 A1 intitulé « Spectrum arrangement for co-channel interference réduction », WO 2012/085620 A1 intitulé « Apparatus and method to set a control channel configuration in a communication system », WO 2012/158077 A1 intitulé « Method and arrangement related to interference between systems » et WO 2011/141177 A1 intitulé « Management of the connections of relay nodes to form an ad hoc network », sont connus de l'état de la technique.

### Exposé de l'invention

Un objectif de l'invention est de palier les inconvénients de l'art antérieur en proposant un procédé de basculement progressif d'une première bande de fréquences vers une deuxième bande de fréquences afin de minimiser les interruptions de communications en cours dans la première bande tout en acceptant de nouvelles communications dans la deuxième bande.

L'invention a donc pour objet un procédé de basculement progressif d'une première bande de fréquences vers une nouvelle bande de fréquences lorsque des premiers nœuds mobiles sont préalablement attachés à une cellule d'un nœud relais, caractérisé en ce que lors d'une détection par le nœud relais d'une interférence sur la première bande de fréquences, le nœud relais déclenche le basculement progressif qui comprend :
- une sélection par le nœud relais d'une nouvelle bande de fréquences non interférée, la nouvelle bande de fréquences étant distincte de la première bande de fréquences,
- une occupation de la nouvelle bande de fréquences par le nœud relais par au moins une émission sur un canal de contrôle de ladite nouvelle bande de fréquences,
- un basculement des communications radio des premiers nœuds mobiles actifs depuis la première bande de fréquences vers la nouvelle bande de fréquences,
- un blocage de l'accès à la connexion au nœud relais via la première bande de fréquences pour au moins un deuxième nœud mobile entrant dans la cellule du nœud relais alors que le basculement est en cours, ledit blocage comprenant au moins une émission d'un signal par le nœud relais sur un canal de contrôle de la première bande de fréquence,
- une libération de la première bande de fréquences par le nœud relais, ladite libération étant constituée de l'arrêt de l'émission dudit signal par le nœud relais sur ledit canal de contrôle de la première bande de fréquence.

L'invention permet d'obtenir un basculement automatique et progressif de bandes de fréquences. Le basculement automatique est effectué à la détection d'une interférence sur la bande de fréquence en cours d'utilisation par le nœud relais.

Le basculement progressif d'une première bande de fréquences vers une nouvelle bande de fréquences dans un même nœud relais, permet aux premiers nœuds mobiles de minimiser l'interruption de la communication déjà établie voir même de l'éviter. A l'occupation de la nouvelle bande de fréquences le nœud relais peut transmettre assez rapidement aux premiers nœuds mobiles actifs via la première bande de fréquences les paramètres nécessaires pour accéder à la deuxième bande de fréquences. De même le basculement progressif à pour avantage d'éviter que des deuxièmes nœuds mobiles arrivant sous la couverture de la cellule gérée par le nœud relais se connectent auprès du nœud relais via la première bande de fréquences interférée. Ainsi le nœud relais bloque, pour les deuxièmes nœuds relais, l'accès à la connexion au nœud relais via la bande de fréquence interférée.

Grâce au blocage de l'accès à la connexion au nœud relais via la première bande de fréquences pour au moins un deuxième nœud mobile, le basculement progressif prend en considération les nœuds mobiles arrivant en cours de basculement appelé ici deuxième nœuds mobiles.

L'invention comporte également l'une quelconque des caractéristiques suivantes :
- la sélection de la nouvelle bande de fréquences est effectuée parmi une pluralité de bandes fréquences distinctes définies dans une table de bandes de fréquences,
- l'occupation de la nouvelle bande de fréquences est réalisée par la diffusion d'un signal de synchronisation et d'information système par le nœud relais sur un canal de contrôle de la nouvelle bande de fréquences,
- le blocage est réalisé par la diffusion d'informations système via la première bande de fréquences, les informations systèmes comprenant :
   ∘ une inaccessibilité à la connexion au nœud relais via la première bande de fréquences à partir d'une première donnée horodatée, et
   ∘ une accessibilité à la connexion au nœud relais via la nouvelle bande de fréquences à partir d'une deuxième donnée horodatée.
- le basculement des premiers nœuds actifs de la première bande de fréquences vers la nouvelle bande de fréquences correspond à un handover d'un nœud mobile depuis un premier nœud relais accessible via la première bande de fréquences vers un deuxième nœud relais accessible via la nouvelle bande de fréquences, le premier nœud relais et le deuxième nœud relais étant un seul et même nœud relais,
- selon une autre réalisation, le basculement d'un premier nœud actif de la première bande de fréquences vers la nouvelle bande de fréquences correspond à un premier basculement de transmission des données de trafic sur des ressources de la nouvelle bande de fréquences, les données de contrôle étant diffusées via la première bande de fréquences, puis d'un basculement de transmission des données de contrôle sur des ressources de la nouvelle bande de fréquences,
- la libération de la première bande de fréquences est réalisée par un arrêt de la diffusion du signal de synchronisation et des informations de système sur le canal de contrôle de la première bande de fréquences,
- après la détection d'une interférence sur la bande de fréquences le nœud relais déclenche un temps de basculement aléatoire et à l'écoulement de ce temps de basculement si la première bande de fréquences est interférée, le basculement progressif est déclenché.

L'invention a aussi pour objets un système de communication comprenant au moins un nœud relais et au moins un nœud mobile apte à détecter un blocage de l'accès à la connexion au nœud relais via la détection d'un signal sur le canal de contrôle de la première bande de fréquences, lorsque le nœud mobile entre dans la cellule du nœud relais, et apte à exécuter un ordre de basculement provenant du nœud relais lorsque le nœud mobile est préalablement attaché à la cellule du nœud relais.

L'invention a aussi pour objets un nœud relais d'un système de radiocommunication caractérisé en ce qu'il comprend des moyens aptes à exécuter les étapes du procédé de basculement progressif d'une première bande de fréquences vers une nouvelle bande de fréquences, ledit procédé étant exécuté lorsque des premiers nœuds mobiles sont préalablement attachés au nœud relais via la première bande de fréquences. Le nœud relais comprenant :
- une unité de détection d'une interférence sur la première bande de fréquences,
- une unité pour sélectionner une nouvelle bande de fréquences non interférée, la nouvelle bande de fréquences étant distincte de la première bande de fréquences,
- une unité pour occuper la nouvelle bande de fréquences par émission d'un signal sur le canal de contrôle de la seconde bande de fréquence,
- une unité pour bloquer l'accès à la connexion au nœud relais via la première bande de fréquences pour au moins un deuxième nœud mobile entrant dans la cellule du nœud relais, et
- une unité pour libérer la première bande de fréquences par l'arrêt de l'émission dudit signal sur ledit canal de contrôle de la première bande de fréquence.

### Brève description des figures

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
- les figures 1A, 1B et 1C : une représentation schématique d'un système de communication respectivement selon les étapes du procédé de basculement progressif selon l'invention,
- la figure 2 : un schéma bloc d'un nœud relais réalisant le basculement selon le procédé de l'invention,
- la figure 3 : un schéma bloc d'un nœud mobile selon l'invention,
- la figure 4 : un diagramme fonctionnel d'un procédé de basculement selon l'invention, et
- la figure 5: un diagramme fonctionnel d'une amélioration du procédé de basculement selon l'invention.

### Description de l'invention

On note dès à présent que les figures ne sont pas à l'échelle.

L'invention s'applique à tout système de radiocommunication cellulaire ad-hoc, tels que les réseaux Wifi, Bluetooth ou tout système de radiocommunication cellulaire relayé tels que les systèmes à infrastructures TETRA ("TErrestrial Trunked RAdio" en anglais), TETRAPOL, les réseaux WIMAX ("Worldwide Interoperability for Microwave Access" en anglais), LTE ("Long Term Evolution" en anglais), ou tous réseaux de radiocommunication de troisième ou quatrième génération.

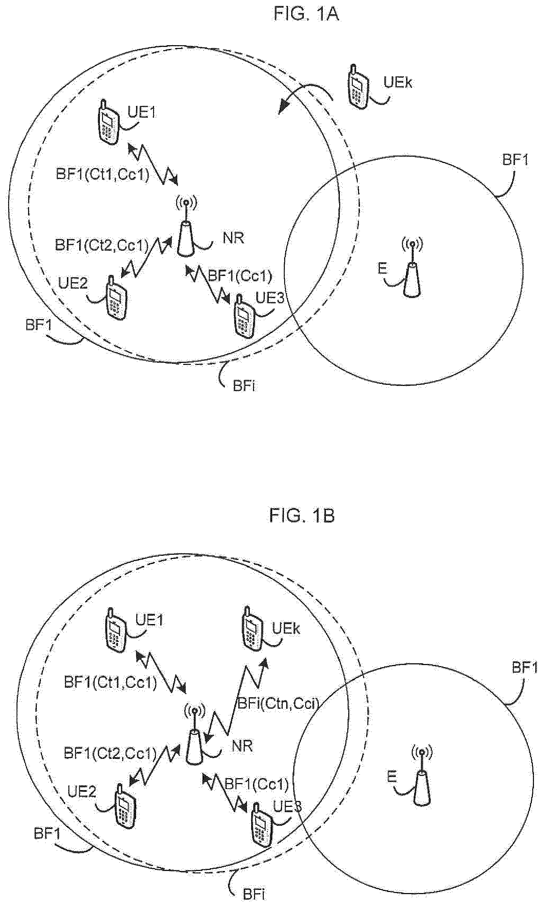

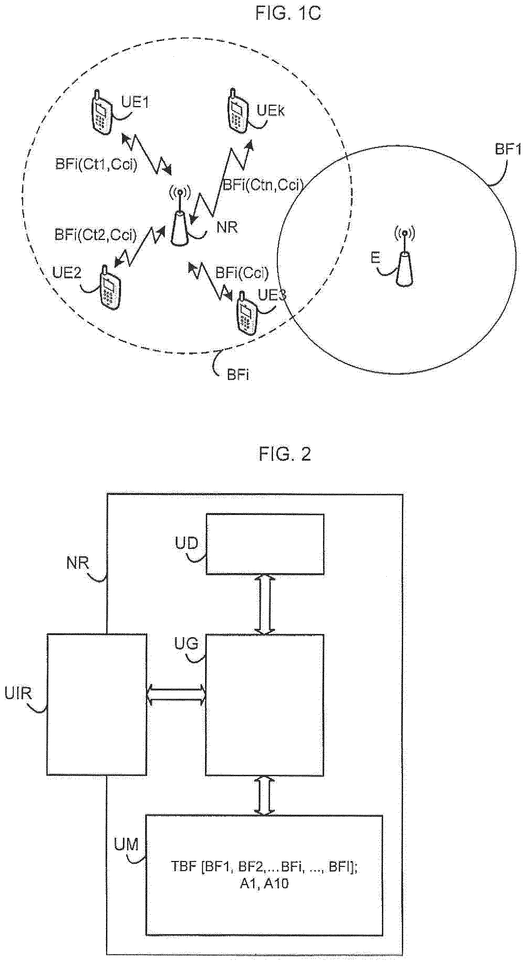

En se référant aux figures 1A, 1B, 1C, un tel système de radiocommunications cellulaires comporte une à plusieurs cellules (une seule cellule est représentée), chacune formée par au moins un nœud relais NR auprès duquel est connecté dans une première bande de fréquences BF1 un ou plusieurs nœuds mobiles UE1, UE2, appelés premiers nœuds mobiles. A la détection par le nœud relais NR d'une interférence sur la première bande de fréquences BF1 causée par exemple par un équipement radio autonome E, le nœud relais commande le basculement de bande de fréquences selon le procédé de l'invention. Le nœud relais NR émet sur une deuxième bande de fréquences BFi (comme illustré à la figure 1B) afin que de nouveaux nœuds mobiles UEk, appelés deuxièmes nœuds mobiles, arrivant dans la cellule du nœud relais NR puissent se connecter au nœud relais NR dans la deuxième bande de fréquences BFi. Le nœud relais NR notifie aux premiers nœuds mobiles actifs UE1, UE2 qu'une nouvelle bande de fréquences BFi est établie et qu'ils peuvent basculer leurs communications radio sur cette nouvelle bande de fréquences afin de minimiser les ruptures de communication en cours. Une fois que tous les premiers nœuds mobiles actifs UE1, UE2 ont notifié leur basculement vers la deuxième bande de fréquences BFi, le nœud relais NR libère la première bande de fréquences BF1 afin qu'elle soit utilisée par d'autres nœuds relais du réseau qui ne subissent pas d'interférence sur la bande BF1 (comme illustré à la figure 1C).

Une bande de fréquences BF comporte un ensemble de canaux radio. Une première partie de l'ensemble de canaux radio, qui sont appelés canaux montants, est dédiée à la transmission de communications montantes depuis un nœud mobile vers le nœud relais. Une deuxième partie de canaux radio, qui sont appelés canaux descendants, est dédiée à la transmission de communications descendantes depuis le nœud relais vers un ou des nœuds mobiles. Selon la technologie implémentée dans le réseau, ce partage de canaux en sens montant ou descendant peut se faire en fréquences (FDD) ou en temps (TDD).

L'ensemble des canaux radio montants et descendants d'une bande de fréquences comprend des canaux de contrôle et des canaux de trafic.

Les canaux de trafic Ct1, Ct2,..Ctm,...CtM sont chacun établi entre le nœud relais et un nœud mobile ou un groupe de nœuds mobiles présents dans la cellule du nœud relais. Les canaux de trafic Ct1, Ct2,..Ctm,...CtM transportent des données de trafic telles que des données voix, des données multimédia, ainsi que les données de signalisation associées au trafic. Les canaux de contrôle Cc diffusent des informations de contrôle telles que des informations de synchronisation et des informations système nécessaires à la synchronisation entre un nœud relais et au moins un nœud mobile, des informations d'allocations nécessaires à l'allocation de ressources.

Chaque nœud relais du système de radiocommunication comprend une table de fréquences TBF qui répertorie les différentes bandes de fréquences BF1, BF2, ...BFi, ...BFI du spectre fréquentiel utilisé par le système de radiocommunication. La table de fréquences indique pour chacune des bandes de fréquences si la bande est à l'état libre ou à l'état occupé. On entend par bande de fréquences à l'état libre une bande de fréquences non interférée ou très faiblement interférée par un autre équipement radio éloigné du nœud relais. L'autre équipement radio peut-être un autre nœud relais du système de radiocommunication qui utilise la même bande de fréquences que le nœud relais NR mais qui est suffisamment éloigné du nœud relais NR pour ne pas interférer dans ses communications radio.

On entend par bande de fréquences à l'état occupé une bande de fréquences en partie ou totalement interférée par un équipement radio proche du nœud relais NR et qui empêche une communication radio efficace entre le nœud relais et les nœuds mobile qui lui sont rattachés via ladite bande de fréquences. L'autre équipement radio peut-être un équipement radio indépendant du système de radio communication qui force ses émissions radio sur une partie de la bande de fréquences utilisée par le nœud relais NR. Selon un autre cas, par exemple dans le cas des réseaux ad-hoc, l'autre équipement radio peut être un autre nœud relais du système de radiocommunication qui arrive et se déploie en utilisant la même bande de fréquences que le nœud relais NR et qui est suffisamment proche du nœud relais NR pour interférer dans ses communications.

Les tables de fréquences dans les nœuds relais du système peuvent comprendre pour des mêmes bandes de fréquences des états différents. Les états des bandes de fréquences dans la table de fréquences sont mis à jour périodiquement par le nœud relais.

Un nœud mobile, appelé également terminal mobile est par exemple un téléphone (Smartphone), une tablette, une clés-modem USB ou tout autre type d'équipement fixe ou mobile (GPS, ordinateur, écran vidéo, ...). Un nœud mobile est une entité apte à s'enregistrer auprès d'un nœud relais dans la cellule duquel il est présent. Une fois enregistré, le nœud mobile peut demander via un canal de contrôle montant l'établissement d'un canal de trafic pour communiquer par l'intermédiaire du nœud relais avec d'autres nœuds mobiles présents dans la cellule ou dans d'autres cellules du réseau.

Dans la suite de la description, on entend par premiers nœuds mobiles, les terminaux mobiles qui sont attachés au nœud relais via la première bande de fréquences BF1 avant le basculement de bandes de fréquences. On entend par deuxièmes nœuds mobiles, les terminaux mobiles qui entrent dans la cellule du nœud mobile alors que le basculement est en cours. On entend par nœuds mobiles actifs des nœuds mobiles connectés à un nœud relais à travers une bande de fréquences spécifique, ils sont en cours de communications, des canaux de trafic leur ont été alloués par le nœud relais dans la bande de fréquences. On entend par nœuds mobiles non-actifs des nœuds mobiles présents sous la couverture du nœud relais qui s'attachent au nœud relais via une bande de fréquences spécifique mais qui ne sont pas connectés au nœud relais. On entend par nœud mobile attaché à un nœud relais, un nœud mobile qui a sélectionné de manière autonome un nœud relais. Un nœud mobile non actif est un nœud mobile attaché à un relais mais non connectés au nœud relais. Le nœud mobile non actif a sélectionné de manière autonome le nœud relais et reçoit depuis la bande de fréquence spécifiques des informations de contrôles diffusées par le nœud relais, mais aucun canal de trafic ne lui est alloué.

Le noeud relais NR peut être intégré dans une infrastructure classique fixe ou mobile de gestion de communication relayée tel que pour les réseaux TETRA®, TETRAPOL®, LTE®, WIMAX®. En variante, le nœud relais NR peut communiquer directement avec d'autres nœuds relais voisins sans infrastructure relayée tel que pour les réseaux ad-hoc de type Wifi® ou Bluetooth®.

La figure 2 illustre plus en détail un tel nœud relais. Le nœud relais comprend :
- une unité UD de détection d'une interférence sur la bande de fréquences en cours d'utilisation par le nœud relais et de détection de l'état des différentes bandes de fréquences BF1, BF2, ...BFi, ...BFI du spectre fréquentiel utilisé par le système de radiocommunication,
- une unité UG de gestion du basculement progressif de la bande de fréquences,
- une unité UIR de communication radio avec des premiers nœuds mobiles via la première bande de fréquences et avec des premiers et deuxièmes nœuds mobiles via la deuxième bande de fréquences, et
- une unité UM de mémorisation.

Le nœud relais comprend d'autres unités de fonctionnement classique non décrites ici.

L'unité UD comporte par exemple un ou plusieurs processeurs mettant en exécution un contrôle de détection d'interférences sur la bande de fréquences en cours d'utilisation par le nœud relais, appelée première bande de fréquences. Selon une première réalisation, le contrôle de détection peut être effectué par une mesure des performances de communication radio lors des échanges entre le nœud relais et ses premiers nœuds mobiles actifs. Lorsque les performances de communication radio décroissent et passent sous un seuil de performance minimal alors la première bande de fréquences peut-être considérée comme interférée.

Selon un autre mode de réalisation, le contrôle radio peut-être effectuée à partir de la mesure de l'efficacité spectrale de la première bande de fréquences par les premiers nœuds mobiles. Cette mesure est reportée au nœud relais qui compare la mesure ou la moyenne des mesures effectuée à un seuil d'efficacité spectrale minimal. Si l'efficacité spectrale de la première bande de fréquences BF1 est inférieure au seuil d'efficacité spectral minimal alors la bande de fréquences est détectée comme interférée. Dans le cas contraire, la bande de fréquences n'est pas interférée ou très peu interférée.

L'unité UD a également pour rôle de détecter l'état d'occupation de chaque bande de fréquences BF1, BF2, ..., BFi, ..., BFI, du spectre fréquentiel utilisé par le système de radiocommunication : état libre ou état occupé.

L'unité UD demande à chaque premier nœud mobile de mesurer la qualité des différentes bandes de fréquences du spectre de fréquence et de reporter les mesures au nœud relais. Pour chaque bande de fréquences, le nœud relais compare si la mesure reçue ou la moyenne des mesures reçues est inférieure à un seuil de référence de qualité. Si la mesure est inférieure au seuil de référence alors l'état de la bande de fréquences est considéré comme occupé. Dans le cas contraire, l'état de la bande de fréquence est considéré comme libre. L'unité UD du nœud relais mémorise l'état déterminé de chaque bande de fréquences dans la table de bande de fréquences TBF. L'unité UD met à jour périodiquement la table de fréquences TBF à chaque mesure effectuée sur une bande de fréquences. La qualité d'une bande de fréquence peut être mesurée en fonction de l'efficacité spectrale.

L'unité UG comporte par exemple un ou plusieurs processeurs pour gérer le basculement progressif de bandes de fréquences entre le nœud relais et les nœuds mobiles présents et à venir dans la cellule. L'unité UG a pour rôles :
- de sélectionner une nouvelle bande de fréquences non interférée à partir de la table TBF,
- de bloquer l'accès à la connexion au nœud relais par l'intermédiaire de la première bande de fréquences interférée pour des deuxièmes nœuds mobiles,
- de notifier le basculement de bandes de fréquences aux premiers nœuds mobiles non actifs, ou de commander le basculement de fréquences aux premiers nœuds actifs, et
- de libérer la bande de fréquences interférée.

Dans le cas des réseaux sans fil et relativement à la sélection de bande de fréquences, l'unité UG peut utiliser le protocole de sélection dynamique de fréquence DFS ("Dynamic Frequency Selection" en anglais) qui a pour objectif de sélectionner dynamiquement des bandes radio afin d'obtenir la meilleure performance fréquentielle. Le protocole DFS est mis en œuvre selon les normes 802.11h et 802.16h. Dans ce cas, le protocole fait appel à la table de fréquences TBF pour sélectionner la bande de fréquences.

L'unité UIR permet de transmettre et de recevoir des messages, notifications depuis/vers les nœuds mobiles via la première bande de fréquences et la nouvelle bande de fréquences. En variante, l'unité UIR comporte deux modules distincts, un premier module gérant les échanges avec les premiers nœuds mobiles dans la première bande de fréquences BF1 et un deuxième module gérant les échanges avec les premiers et les deuxièmes nœuds mobiles dans la nouvelle bande de fréquences BFi.

L'unité UM est un support mémoire dans lequel peuvent être sauvegardés des programmes. Il comprend des mémoires volatiles et/ou non volatiles telles que des mémoires EEPROM, ROM, PROM, RAM, DRAM, SRAM, etc. L'unité UM mémorise également la table TBF de bandes de fréquences mise à jour par le nœud relais NR.

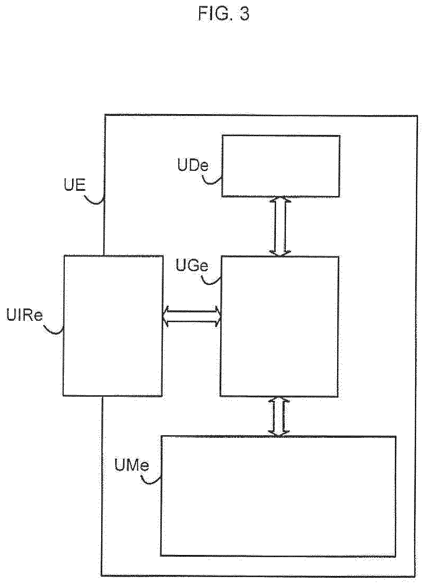

Comme illustré à la figure 3, chaque nœud mobile UE comprend :
- une unité UDe de mesure de la qualité de chaque bande de fréquences BF1, BF2, .., BFi, ...BFI du spectre fréquentiel utilisé par le système de radiocommunication,
- une unité UGe de gestion du basculement de bandes de fréquences,
- une unité UIRe de communication radio avec un nœud relais, et
- une unité UMe de mémorisation.

L'unité UDe comporte un ou plusieurs processeurs mettant en exécution des mesures de qualité des bandes de fréquences utilisées par le système de radiocommunication. Lorsque le nœud mobile, en tant que premier nœud mobile, est connecté à un nœud relais ces mesures sont transmises au nœud relais pour qu'il détecte une possible interférence de la première bande de fréquence ou qu'il détecte l'état d'occupation de chaque bande de fréquences afin de mettre à jour la table de fréquence TBF.

L'unité UGe comporte par exemple un ou plusieurs processeurs pour :
- s'attacher à un nœud relais par l'intermédiaire d'une bande de fréquences spécifique,
- détecter le blocage de l'accès à la connexion au nœud relais émettant sur la première bande de fréquences spécifique en fonction des informations systèmes émises par ledit nœud relais via la première bande de fréquences et s'attacher audit nœud relais par l'intermédiaire d'une nouvelle bande de fréquences en fonction des informations systèmes émises par ledit nœud relais via la première bande de fréquences,
- traiter un ordre de basculement reçu par le nœud relais auquel il est connecté pour effectuer le basculement de la première bande de fréquences vers la nouvelle bande de fréquences.

L'unité UGe d'un nœud mobile gère d'autres fonctions classiques d'un nœud mobile qui ne sont pas décrits ici.

L'unité UIRe permet de transmettre et de recevoir des messages, notifications depuis/vers les nœuds relais via la première bande de fréquences et la nouvelle bande de fréquences. En variante, l'unité UIRe comporte deux modules distincts, un premier module gérant les échanges avec le nœud relais dans la première bande de fréquences BF1 et un deuxième module gérant les échanges avec le nœud relais dans la nouvelle bande de fréquences BFi.

L'unité UM est un support mémoire dans lequel peuvent être sauvegardés des programmes. Il comprend des mémoires volatiles et/ou non volatiles telles que des mémoires EEPROM, ROM, PROM, RAM, DRAM, SRAM, etc.

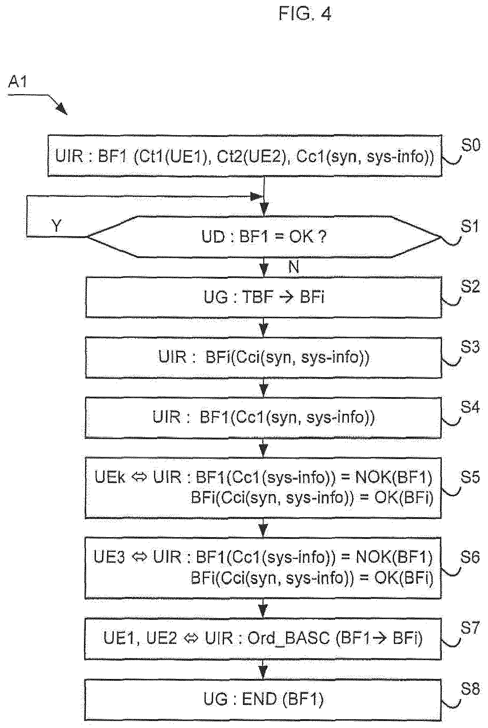

La figure 4 représente le schéma logique de l'algorithme A1 mettant en œuvre les étapes du procédé de basculement progressif de bande de fréquences selon l'invention.

A l'étape initiale S0, on considère que le nœud relais NR communique via l'unité UIR du nœud relais avec les unités UIRe des premiers nœuds mobiles UE1, UE2 dans une première bande de fréquences BF1. Selon l'exemple, des canaux de contrôle Cc1 et de trafic Ct1, Ct2 sont établis entre le nœud relais NR et respectivement le nœud mobile actif UE1 et le nœud mobile actif UE2. Le nœud mobile UE3 compris sous la couverture réseau du nœud relais NR est non-actif puisqu'aucun canal de trafic n'est établi entre lui et le nœud relais. Le nœud mobile UE3 qui c'est attaché au nœud relais NR via la première bande de fréquence reçoit les informations de contrôle diffusées par le nœud relais via le canal de contrôle Cc1. Le nœud relais occupe la première bande de fréquences BF1 en émettant un signal de synchronisation « syn » et un signal d'information système « sys-inf » via le canal de contrôle Cc1 de la première bande de fréquences.

A l'étape S1, l'unité UD de détection du nœud relais effectue des mesures radio du réseau afin de détecter une possible interférence sur la bande de fréquences BF1. Tant qu'il n'y a pas de détection d'interférence c'est-à-dire tant que « BF1= OK » est à « Y » sur la figure 3, le nœud relais NR continue d'échanger sur la bande de fréquences BF1. Dès que l'unité UD du nœud relais détecte une interférence c'est-à-dire que « BF1 = OK » est à « N » sur la figure 3, l'unité de gestion UG du nœud relais NR commande le basculement de bande de fréquences à l'étape S2.

A l'étape S2, l'unité UG du nœud relais sélectionne dans la table TBF une bande de fréquences à l'état libre BFi. La sélection peut se faire en fonction de la bande de fréquences ayant la meilleure efficacité spectrale indiquant de ce fait qu'elle n'est pas interférée ou très faiblement interférée par un autre équipement radio voisin.

Puis à l'étape S3, l'unité UIR du nœud relais occupe la nouvelle bande de fréquences BFi en émettant un signal de synchronisation « syn » et un signal d'information système « sys-info » dans le canal de contrôle Cci de la deuxième bande de fréquences BFi. Le nœud relais indique ainsi qu'il utilise la bande de fréquences BFi à tous les nœuds mobiles non encore actifs UE3, ou arrivant sous la cellule du nœud relais NR tel que le nœud mobile UEk. A l'étape S4, le nœud relais NR continue d'émettre un signal de synchronisation « syn » et un signal d'information système « sys-info » dans le canal de contrôle Cc1 de la première bande de fréquences BF1 afin d'indiquer que la première bande de fréquences est toujours occupée. Cependant le nœud relais bloque tout accès à la connexion audit nœud relais via la première bande de fréquences BF1 pour tout deuxième nœud mobile UEk. En effet, lors de l'exécution du basculement progressif de bandes de fréquences, l'unité UG du nœud relais modifie le signal d'information système « sys-info » relatif à la première bande de fréquences BF1 afin d'indiquer à tout deuxième nœud mobile UEk l'impossibilité de se connecter au nœud relais via la première bande de fréquences BF1. Le signal d'information système comprend alors les informations suivantes :
- inaccessibilité à la connexion au nœud relais via la première bande de fréquences BF1 à partir d'un instant correspondant à une première donnée horodatée,
- accessibilité à la connexion au nœud relais via la nouvelle bande de fréquences BFi à partir d'un instant correspondant à une deuxième donnée horodatée.

Le nœud relais reste accessible à la connexion via la première bande de fréquences aux premiers nœuds mobiles déjà connectés au nœud relais NR. La première donnée horodatée et la deuxième donnée horodatée sont définies de sorte qu'à l'attachement d'un deuxième nœud mobile au nœud relais via la nouvelle bande de fréquences BFi, l'accès à la connexion au nœud relais via la bande de fréquence BF1 ne soit pas déjà bloqué par le nœud relais.

L'étape S4 peut être exécutée avant ou en même temps que l'étape S3.

A l'étape S5, à l'attachement au nœud relais via la première bande de fréquences par le nœud mobile UEk, l'unité UIRe du deuxième nœud mobile UEk reçoit les informations de contrôle diffusées par le nœud relais via la première bande de fréquences. Les données d'information système sys-info indiquent l'inaccessibilité à la connexion du nœud relais via la première bande à partir d'un instant correspondant à la première donnée horodatée. Le deuxième nœud mobile considère donc que le nœud relais est inaccessible depuis la bande de fréquence BF1 : « NOK(BF1) ». En même temps, le deuxième nœud mobile UEk reçoit, via ces mêmes informations systèmes, l'information que le nœud relais est accessible à la connexion via la nouvelle bande de fréquences BFi à partir d'un instant correspondant à la deuxième donnée horodatée. Le deuxième nœud mobile considère donc que le nœud relais est accessible depuis la bande de fréquence BFi: « OK(BFi) ». Les paramètres fréquentiels de la nouvelle bande de fréquences BFi peuvent être également transmis dans les informations sys-info de la première bande de fréquences. En variante, le deuxième nœud mobile UEk détecte par lui-même le signal de synchronisation émis par le nœud relais dans la nouvelle bande de fréquences BFi et demande un enregistrement auprès du nœud relais NR dans la nouvelle bande de fréquences BFi via un canal montant de contrôle dans la nouvelle bande de fréquences BFi. Par exemple selon la technologie LTE, le nœud relais transmet via les canaux de contrôle PSCH (Primary Synchronisation Channel), SSS (Secondary Synchronisation Channel) et PBCH (Physical Broadcast Channel) les paramètres physiques du système qui sont : la synchronisation, l'identité de la cellule, la largeur de bande LTE ainsi que l'heure système.

A l'étape S6, le premier nœud mobile non-actif UE3 reçoit également les informations système diffusés sur le canal de contrôle de la bande de fréquences BF1 et est informé de l'inaccessibilité à la connexion au nœud relais via la bande de fréquences BF1 : « NOK(BF1) ». De même grâce à ces mêmes informations système, le premier nœud mobile non-actif UE3 est informé de l'accessibilité à la connexion au nœud relais via la deuxième bande de fréquence BFi : « OK(BFi) ». Le nœud mobile non-actif va se détacher du nœud relais NR via la première bande de fréquences BF1, et s'attacher au nœud mobile via la nouvelle bande de fréquences BFi.

Les étapes S5 et S6 peuvent être exécutées en même temps.

A l'étape S7, le nœud relais commande aux premiers terminaux actifs UE1, UE2 le basculement de leur communication vers la nouvelle bande radio BFi. La commande Ord_BASC est une donnée de signalisation transmise pour chaque nœud mobile actif UE1, UE2 dans le canal descendant de trafic respectivement Ct1 et Ct2 de la bande de fréquences BF1. Selon une première réalisation, le basculement de la première bande de fréquences BF1 vers la nouvelle bande de fréquences BFi pour les premiers nœuds mobiles actifs UE1 et UE2 correspond à un basculement classique appelé également « handover » en anglais, d'un nœud mobile entre deux nœuds relais proches ayant des bandes de fréquences différentes. Dans le cas présent de l'invention, les nœuds relais proches sont un seul et même nœud relais qui gère deux bandes de fréquences différentes. Avant le basculement effectif de bandes, le premier nœud mobile connait, les paramètres d'accès à la nouvelle bande de fréquences BFi. Ce qui permet un basculement rapide en minimisant le temps d'interruption de communication du nœud mobile actif. Les paramètres d'accès à la nouvelle bande de fréquences BFi peuvent être transmis au premier nœud mobile actif en même temps que l'ordre de basculement ou à la lecture des informations système sys-info de la bande BF1 après l'ordre de basculement. L'ordonnancement du basculement de chaque nœud mobile actif UE1, UE2 peut se faire de manière successive par le nœud relais.

Selon une autre réalisation, le basculement d'un premier nœud mobile actif de la première bande de fréquences BF1 vers la nouvelle bande de fréquences BFi peut se faire de manière plus progressive encore, sans aucune interruption de communication. En effet, l'unité de gestion UG du nœud relais NR peut lors de l'émission de l'ordre de basculement Ord_BASC, ordonner la transmission des données de trafic en allouant des ressources dans la nouvelle bande de fréquences BFi tout en continuant de diffuser des informations de contrôle dans la première bande de fréquences BF1. Ceci à pour effet, la possibilité d'accéder plus rapidement à des ressources non interférées pour transmettre les données de trafic sans pour autant attendre que toutes les ressources dans la nouvelle bande de fréquences soient disponibles pour basculer en une seule fois les données de contrôle et les données de trafic. Les informations sur l'allocation des ressources pour les données de trafic dans la nouvelle bande de fréquences BFi sont indiquées dans les informations systèmes sys-info transmises via le canal de contrôle Cc1 dans la première bande de fréquences BF1. Ainsi le basculement des données de trafic de la première bande de fréquences vers la nouvelle bande de fréquences se fait sans interruption de la communication établie par le premier nœud mobile actif. Si l'interférence de la première bande de fréquence perdure, le nœud relais recherche des ressources nécessaires dans la nouvelle bande de fréquences BFi pour les allouer à la diffusion des informations de contrôle. Une fois que le basculement des transmissions des données de contrôle et de trafic est effectué sur la nouvelle bande de fréquences BFi, le nœud relais passe à l'étape suivante.

En variante, avant un basculement total des bandes de fréquences, il se peut que le nœud relais détecte que la première bande de fréquences BF1 n'est plus interférée. Dans ce cas, le nœud relais peut de nouveau allouer des ressources dans la bande BF1 pour la transmission des données de trafic sachant que les données de contrôle sont déjà diffusées dans cette bande de fréquence.

Après le basculement effectif et total des données de contrôle et des données de trafic depuis la première bande de fréquences BF1 vers la deuxième bande de fréquences BFi, chaque premier nœud mobile actif informe le nœud relais NR que le nœud mobile à bien basculé vers la nouvelle bande de fréquences. Cette information est transmise au nœud relais via un canal de contrôle de la nouvelle bande de fréquences BFi, par exemple le canal de contrôle montant RACH (« Random Access Channel » en anglais) en LTE.

En variante, le nœud relais NR active un temps de basculement lors par exemple de la première transmission de l'ordre de basculement à un premier nœud mobile actif. A la fin de l'écoulement du temps de basculement, le nœud relais considère que le basculement est terminé.

En variante pour considérer le basculement de bandes effectif, le nœud relais peut combiner la fin du temps de basculement et la réception de toutes les informations de fin de basculement de chaque nœud mobile actif qui a basculé.

A l'étape S8, dès que tous les premiers nœuds mobiles actifs UE1, UE2 ont basculé leur communication radio de la première bande de fréquences vers la deuxième bande de fréquences et en ont informé le nœud relais NR et/ou lorsque le temps de basculement est écoulé, le nœud relais libère la première bande de fréquences BF1 : END(BF1). On entend par « libère la première bande de fréquences » le fait que le nœud relais n'émet plus de signal de synchronisation syn sur le canal de contrôle Cc1 de la première bande de fréquences BF1. D'autres nœuds relais pourront ainsi sélectionner la bande de fréquences BF1 qu'ils considèrent comme peu interférée pour échanger avec des nœuds mobiles de leur cellule.

Le basculement de bandes de fréquences se fait progressivement et permet ainsi aux premiers nœuds mobiles actifs de ne pas interrompre brusquement leur communication ou de diminuer le temps d'interruption pour basculer dans la nouvelle bande de fréquences. Les nouveaux nœuds mobiles qui entrent dans la cellule du nœud relais NR lors du basculement peuvent s'attacher et se connecter au nœud relais NR dans la nouvelle bande de fréquences BFi.

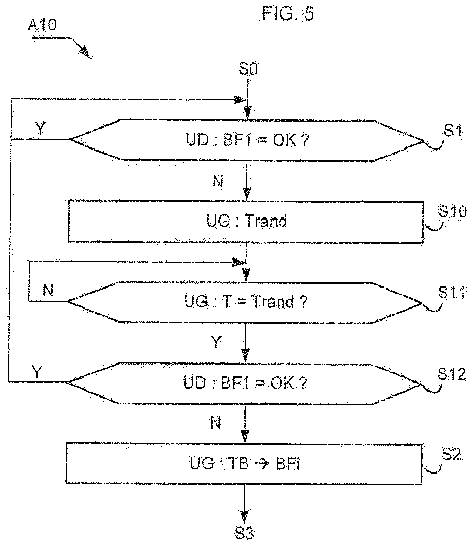

La figure 5 représente une amélioration du procédé de basculement progressif de bande de fréquences en évitant tout conflit de sélection d'une même deuxième bande de fréquences par deux nœuds relais voisins dans le système de communication qui exécutent un basculement de bande de fréquences en même temps. Des étapes se rajoutent aux étapes du procédé illustré sur la figure 3.

A l'étape S10, exécutée après l'étape S1 de détection d'une interférence sur la bande de fréquences BF1, l'unité de gestion UG de nœud relais détermine une valeur de temps aléatoire Trand. L'unité UG lance une temporisation à l'étape S11 qui ne s'arrête pas tant que le temps écoulé T est différent de la valeur Trand : « T = Trand » est à « N » sur la figure 4.

Dès la fin de la temporisation, c'est-à-dire dès que « T = Trand » est à « Y » sur la figure 4, l'unité de gestion UG passe à l'étape S12. A l'étape S12, l'unité UG vérifie si la première bande de fréquences BF1 est toujours interférée. La vérification de l'interférence est identique à la détection de l'interférence. Si la première bande de fréquences n'est pas interférée (« BF1=OK » est à « Y » sur la figure 4), le nœud relais n'effectue pas le basculement de bande de fréquences et l'exécution du procédé retourne à l'étape S0.

Si après la fin de la temporisation, la première bande de fréquences est détectée interférée à l'étape S12 (« BF1=OK » est à « N » sur la figure 4), l'unité de gestion UG exécute l'étape S2 pour sélectionner une nouvelle bande de fréquences BFi parmi les bandes de fréquences libres de la table de fréquences TBF. La table de fréquences peut avoir été auparavant mise à jour.

La temporisation aléatoire Trand évite tout conflit de sélection d'une même deuxième bande de fréquences par deux nœuds relais proches qui détectent en même temps une interférence dans la bande de fréquences en cours d'utilisation. La temporisation permet de différer la sélection de la deuxième bande de fréquences si besoin.

## Revendications

1. Procédé de basculement progressif d'une première bande de fréquences (BF1) vers une nouvelle bande de fréquences (BFi) lorsque des premiers nœuds mobiles sont préalablement attachés à une cellule d'un nœud relais (NR), **caractérisé en ce que** lors d'une détection (S1) par le nœud relais d'une interférence sur la première bande de fréquences, le nœud relais déclenche le basculement progressif qui comprend :
- une sélection (S2) par le nœud relais d'une nouvelle bande de fréquences non interférée (BFi), ladite nouvelle bande de fréquences étant distincte de la première bande de fréquences,
- une occupation (S3) de la nouvelle bande de fréquences par le nœud relais par au moins une émission sur un canal de contrôle de ladite nouvelle bande de fréquences,
- un basculement (S7) des communications radio des premiers nœuds mobiles actifs, depuis la première bande de fréquences vers la nouvelle bande de fréquences, et
- un blocage (S4) de l'accès à la connexion au nœud relais via la première bande de fréquences pour au moins un deuxième nœud mobile entrant dans la cellule du nœud relais alors que le basculement est en cours, ledit blocage comprenant au moins une émission d'un signal par le nœud relais sur un canal de contrôle de la première bande de fréquence ;
- une libération (S8) de la première bande de fréquences par le nœud relais, ladite libération étant constitué de l'arrêt de l'émission dudit signal par le nœud relais sur ledit canal de contrôle de la première bande de fréquence.

2. Procédé conforme à la revendication 1, **caractérisé en ce que** la sélection (S2) de la nouvelle bande de fréquences (BFi) est effectuée parmi une pluralité de bandes fréquences distinctes définies dans une table de bandes de fréquences (TBF).

3. Procédé conforme à la revendication 1 ou 2, **caractérisé en ce que** l'occupation (S3) de la nouvelle bande de fréquences (BFi) est réalisée par la diffusion d'un signal de synchronisation (syn) et d'information système (sys-info) par le nœud relais sur un canal de contrôle de la nouvelle bande de fréquences (BFi).

4. Procédé conforme à l'une quelconque des revendications précédentes, **caractérisé en ce que** le blocage (S4) est réalisé par la diffusion d'informations système via la première bande de fréquences, les informations systèmes comprenant :
- une inaccessibilité à la connexion au nœud relais via la première bande de fréquences (BF1) à partir d'une première donnée horodatée, et
- une accessibilité à la connexion au nœud relais via la nouvelle bande de fréquences (BFi) à partir d'une deuxième donnée horodatée.

5. Procédé conforme à l'une quelconque des revendications précédentes, **caractérisé en ce que** le basculement (S7) des premiers nœuds actifs de la première bande de fréquences vers la nouvelle bande de fréquences correspond à un handover d'un nœud mobile depuis un premier nœud relais accessible via la première bande de fréquences vers un deuxième nœud relais accessible via la nouvelle bande de fréquences, le premier nœud relais et le deuxième nœud relais étant un seul et même nœud relais.

6. Procédé conforme à l'une quelconque des revendications 1 à 4, **caractérisé en ce que** le basculement d'un premier nœud actif de la première bande de fréquences (BF1) vers la nouvelle bande de fréquences (BFi) correspond à un premier basculement de transmission des données de trafic sur des ressources de la nouvelle bande de fréquences (BFi), les données de contrôle étant diffusées via la première bande de fréquences (BF1), puis d'un basculement de transmission des données de contrôle sur des ressources de la nouvelle bande de fréquences (BFi).

7. Procédé conforme à la revendication 3 ou l'une quelconque des revendications précédentes 4 à 6 en combinaison avec la revendication 3, **caractérisé en ce que** la libération (S8) de la première bande de fréquences (BF1) est réalisée par un arrêt de la diffusion du signal de synchronisation (syn) et des informations de système (sys-info) sur le canal de contrôle de la première bande de fréquences.

8. Procédé conforme à l'une quelconque des revendications précédentes, **caractérisé en ce qu'**après la détection d'une interférence (S1) sur la bande de fréquences (BF1) le nœud relais déclenche un temps de basculement aléatoire et à l'écoulement de ce temps de basculement si la première bande de fréquences est interférée, le basculement progressif est déclenché.

9. Système de radiocommunication comprenant:
- au moins un nœud relais comprenant des moyens aptes à exécuter les étapes due procédé de basculement progressif d'une première bande de fréquences (BF1) vers une nouvelle bande de fréquences (BFi) selon les revendications 1 à 8, et
- au moins un nœud mobile apte à détecter un blocage de l'accès à la connexion au nœud relais via la détection d'un signal sur le canal de contrôle de la première bande de fréquences, lorsque le nœud mobile entre dans la cellule du nœud relais, et apte à exécuter un ordre de basculement provenant du nœud relais lorsque le nœud mobile est préalablement attaché à la cellule du nœud relais.

10. Nœud relais (NR) d'un système de radiocommunication **caractérisé en ce qu'**il comprend des moyens aptes à exécuter les étapes du procédé de basculement progressif d'une première bande de fréquences (BF1) vers une nouvelle bande de fréquences (BFi) selon les revendications 1 à 8, ledit procédé étant exécuté lorsque des premiers nœuds mobiles sont préalablement attachés au nœud relais via la première bande de fréquences, le nœud relais comprenant :
- une unité de détection (UD) d'une interférence sur la première bande de fréquences (BF1),
- une unité (UG) pour sélectionner une nouvelle bande de fréquences non interférée, la nouvelle bande de fréquences étant distincte de la première bande de fréquences,
- une unité (UG, UIR) pour occuper la nouvelle bande de fréquences par émission d'un signal sur le canal de contrôle de la seconde bande de fréquence,
- une unité (UG, UIR) pour bloquer l'accès à la connexion au nœud relais via la première bande de fréquences pour au moins un deuxième nœud mobile entrant dans la cellule du nœud relais, et
- une unité (UG, UIR) pour libérer la première bande de fréquences par l'arrêt de l'émission dudit signal sur ledit canal de contrôle de la première bande de fréquence.

## Patentansprüche

1. Progressives Umschaltverfahren eines ersten Frequenzbandes (BF1) auf ein neues Frequenzband (BFi), wenn ersten mobilen Knoten zuvor an einer Zelle eines Relaisknotens (NR) befestigt sind, **dadurch gekennzeichnet, dass** bei einem Erkennen (S1) einer Interferenz auf dem ersten Frequenzband durch den Relaisknoten, der Relaisknoten das progressive Umschalten auslöst, das umfasst:
- eine Auswahl (S2) eines neuen, nicht interferierten Frequenzbandes (BFi) durch den Relaisknoten, wobei das genannte neue Frequenzband von dem ersten Frequenzband unterschiedlich ist;
- eine Belegung (S3) des neuen Frequenzbandes durch den Relaisknoten durch wenigstens eine Ausgabe des genannten Frequenzbandes auf einem Steuerkanal,
- ein Umschalten (S7) der Funkkommunikationen der ersten aktiven mobilen Knoten ausgehend von dem ersten Frequenzband zu dem neuen Frequenzband und
- eine Sperrung (S4) des Zugriffs auf den Anschluss am Relaisknoten über das erste Frequenzband für wenigstens einen zweiten mobilen Knoten, der in die Zelle des Relaisknotens eintritt, während das Umschalten in Gange ist, wobei das genannte Sperren wenigstens eine Ausgabe eines Signals durch den Relaisknoten auf einem Steuerkanal des ersten Frequenzbandes umfasst;
- eine Freigabe (S8) des ersten Frequenzbandes durch den Relaisknoten, wobei die genannte Freigabe aus dem Abschalten der Ausgabe des genannten Signals durch den Relaisknoten auf dem genannten Steuerkanal des ersten Frequenzbandes gebildet wird.

2. Verfahren gemäß Anspruch 1, **dadurch gekennzeichnet, dass** die Auswahl (S2) des neuen Frequenzbandes (BFi) aus einer Vielzahl von unterschiedlichen Frequenzbändern durchgeführt wird, die in einer Frequenzbandtafel (TBF) definiert werden.

3. Verfahren gemäß Anspruch 1 oder 2, **dadurch gekennzeichnet, dass** die Belegung (S3) des neuen Frequenzbandes (BFi) durch das Ausstrahlen eines Synchronisationssignals (syn) und Systeminformationen (sys-info) durch den Relaisknoten auf einem Steuersignal des neuen Frequenzbandes (BFi) realisiert wird.

4. Verfahren gemäß irgendeinem der voranstehenden Ansprüche, **dadurch gekennzeichnet, dass** die Sperrung (S4) durch das Ausstrahlen von Systeminformationen über das erste Frequenzband realisiert wird, wobei die Systeminformationen umfassen:
- eine Unzugänglichkeit zum Anschluss am Relaisknoten über das erste Frequenzband (BFi) ausgehend von einem ersten zeitgestempelten Datenelement und
- eine Zugänglichkeit zum Anschluss am Relaisknoten über das neue Frequenzband (BFi) ausgehend von einem zweiten zeitgestempelten Datenelement.

5. Verfahren gemäß irgendeinem der voranstehenden Ansprüche, **dadurch gekennzeichnet, dass** das Umschalten (S7) der ersten aktiven Knoten des ersten Frequenzbandes auf das neue Frequenzband einem Handover eines mobilen Knotens ausgehend von einem ersten Relaisknoten, der über das erste Frequenzband zugänglich ist, zu einem zweiten Relaisknoten, der über das neue Frequenzband zugänglich ist, entspricht, wobei der erste Relaisknoten und der zweite Relaisknoten ein und derselbe Relaisknoten sind.

6. Verfahren gemäß irgendeinem der Ansprüche 1 bis 4, **dadurch gekennzeichnet, dass** das Umschalten eines ersten aktiven Knotens des ersten Frequenzbandes (BFi) auf das neue Frequenzband (BFi) einem ersten Umschalten der Übertragung der Verkehrsdaten auf Ressourcen des neuen Frequenzbandes (BFi), wobei die Steuerdaten über das erste Frequenzband (BFi) ausgestrahlt werden, dann einem Umschalten der Übertragung der Steuerdaten auf Ressourcen des neuen Frequenzbandes (BFi) entspricht.

7. Verfahren gemäß Anspruch 3 oder irgendeinem der voranstehenden Ansprüche 4 bis 6 in Verbindung mit Anspruch 3, **dadurch gekennzeichnet, dass** die Freigabe (S8) des ersten Frequenzbandes (BFi) durch eine Abschaltung des Ausstrahlens des Synchronisationssignals (syn) und der Systeminformationen (sys-info) auf dem Steuerkanal des ersten Frequenzbandes realisiert wird.

8. Verfahren gemäß irgendeinem der voranstehenden Ansprüche, **dadurch gekennzeichnet, dass** nach dem Erkennen einer Interferenz (S2) auf dem Frequenzband (BF1) der Relaisknoten eine zufällige Umschaltzeit auslöst und das progressive Umschalten bei Ablauf dieser Umschaltzeit ausgelöst wird, wenn das erste Frequenzband interferiert ist.

9. Funkkommunikationssystem, umfassend:
- wenigstens einen Relaisknoten, umfassend Mittel, die zum Ausführen der Schritte des progressiven Umschaltverfahrens von einem ersten Frequenzband (BF1) auf ein neues Frequenzband (BFi) gemäß den Ansprüchen 1 bis 8 geeignet sind und
- wenigstens einen mobilen Knoten, der zum Erkennen eine Sperrung des Zugriffs auf den Anschluss an den Relaisknoten über das Erkennen eines Signals auf dem Steuerkanal des ersten Frequenzbandes geeignet ist, wenn der mobile Knoten in die Zelle des Relaisknotens eintritt, und zum Ausführen eines Umschaltbefehls geeignet ist, der von dem Relaisknoten stammt, wenn der mobile Knoten zuvor an der Zelle des Relaisknotens befestigt ist.

10. Relaisknoten (NR) eines Funkkommunikationssystems, **dadurch gekennzeichnet, dass** er Mittel umfasst, die zum Ausführen der Schritte des progressiven Umschaltverfahrens eines ersten Frequenzbandes (BF1) auf ein neues Frequenzband (BFi) gemäß den Ansprüchen 1 bis 8 geeignet sind, wobei das genannte Verfahren ausgeführt wird, wenn die ersten mobilen Knoten zuvor über das erste Frequenzband am Relaisknoten befestigt sind, wobei der Relaisknoten umfasst:
- eine Erkennungseinheit (UD) einer Interferenz auf dem ersten Frequenzband (BFi),
- eine Einheit (UG) zum Auswählen eines neuen, nicht interferierten Frequenzbandes, wobei das neue Frequenzband vom ersten Frequenzband unterschiedlich ist,
- eine Einheit (UG, UIR) zum Belegen des neuen Frequenzbandes per Ausgabe eines Signals des zweiten Frequenzbandes auf dem Steuerkanal,
- eine Einheit (UG, UIR) zum Sperren des Zugangs zum Anschluss am Relaisknoten über das erste Frequenzband für wenigstens einen zweiten mobilen Knoten, der in die Zelle des Relaisknotens eintritt, und
- eine Einheit (UG, UIR) zum Freigeben des ersten Frequenzbandes durch das Abschalten der Ausgabe des genannten Signals des ersten Frequenzbandes auf dem genannten Steuerkanal.

## Claims

1. A method for gradually switching from a first frequency band (BF1) to a new frequency band (BFi) when first mobile nodes are attached beforehand to a cell of a relay node (NR), **characterised in that** upon detecting (S1) by the relay node an interference on the first frequency band, the relay node triggers the gradual switching which comprises:
- selecting (S2) by the relay node a new non-interfered frequency band (BFi), said new frequency band being distinct from the first frequency band,
- occupying (S3) the new frequency band by the relay node by at least one emission on a control channel of said new frequency band,
- switching (S7) the radio communications of the first active mobile nodes, from the first frequency band to the new frequency band, and
- blocking (S4) connection access to the relay node via the first frequency band for at least one second mobile node entering the cell of the relay node whereas the switching is ongoing, said blocking comprising at least one emission of a signal by the relay node on a control channel of the first frequency band;
- releasing (S8) the first frequency band by the relay node, said releasing consisting in stopping the emission of said signal by the relay node on said control channel of the first frequency band.

2. The method in accordance with claim 1, **characterised in that** selecting (S2) the new frequency band (BFi) is performed among a plurality of distinct frequency bands defined in a frequency band table (FBT).

3. The method in accordance with claim 1 or 2, **characterised in that** occupying (S3) the new frequency band (BFi) is performed by broadcasting a synchronisation signal (syn) and system information (sys-info) by the relay node on a control channel of the new frequency band (BFi).

4. The method in accordance with any of the preceding claims, **characterised in that** blocking (S4) is performed by broadcasting system information via the first frequency band, the system information comprising:
- a connection inaccessibility to the relay node via the first frequency band (BF1) from a first time stamped datum, and
- a connection accessibility to the relay node via the new frequency band (BFi) from a second time stamped datum.

5. The method in accordance with any of the preceding claims, **characterised in that** switching (S7) the first active nodes from the first frequency band to the new frequency band corresponds to a handover of a mobile node from a first relay node accessible via the first frequency band to a second relay node accessible via the new frequency band, the first relay node and the second relay node being one and the same relay node.

6. The method in accordance with any of claims 1 to 4, **characterised in that** switching a first active node from the first frequency band (BF1) to the new frequency band (BFi) corresponds to a first transmission switching of the traffic data on resources of the new frequency band (BFi), the control data being broadcast via the first frequency band (BF1), and then to a transmission switching of the control data on resources of the new frequency band (BFi).

7. The method in accordance with claim 3 or any of the preceding claims 4 to 6 in combination with claim 3, **characterised in that** releasing (S8) the first frequency band (BF1) is performed by stopping broadcasting the synchronisation signal (syn) and system information (sys-info) on the control channel of the first frequency band.

8. The method in accordance with any of the preceding claims, **characterised in that** after detecting an interference (S1) on the frequency band (BF1), the relay node triggers a random switching time and when this switching time has elapsed, if the first frequency band is interfered, the gradual switching is triggered.

9. A radio communication system comprising:
- at least one relay node comprising means able to carry out the steps of the method for gradually switching from a first frequency band (BF1) to a new frequency band (BFi) according to claims 1 to 8, and
- at least one mobile node able to detect blocking the connection access to the relay node via detecting a signal on the control channel of the first frequency band, when the mobile node enters the cell of a relay node, and able to carry out a switching command from the relay node when the relay node is attached beforehand to the cell of the relay node.

10. A relay node (NR) of a radio communication system **characterised in that** it comprises means able to carry out the steps of the method for gradually switching from a first frequency band (BF1) to a new frequency band (BFi) according to claims 1 to 8, said method being carried out when first mobile nodes are attached beforehand to the relay node via the first frequency band, the relay node comprising:
- a detection unit (UD) for detecting an interference on the first frequency band (BF1),
- a unit (UG) for selecting a non-interfered new frequency band, the new frequency band being distinct from the first frequency band,
- a unit (UG, UIR) for occupying the new frequency band by emitting a signal on the control channel of the second frequency band,
- a unit (UG, UIR) for blocking connection access to the relay node via the first frequency band for at least one second mobile node entering the cell of the relay node, and
- a unit (UG, UIR) for releasing the first frequency band by stopping the emission of said signal on said control channel of the first frequency band.
